# EUROPÄISCHE PATENTSCHRIFT

(11) **EP 3 067 127 B1**
(45) Veröffentlichungstag und Bekanntmachung des Hinweises auf die Patenterteilung: **09.10.2019**
(21) Anmeldenummer: 15158747.4
(22) Anmeldetag: 12.03.2015
(51) Int. Cl.: B21C 47/22, B23D 31/00, G01N 1/04, B21C 47/34, B21C 51/00

(54) **VORRICHTUNG ZUM INSPIZIEREN UND BEPROBEN EINES GEHASPELTEN BUNDES AUS METALLBAND**
DEVICE FOR INSPECTING AND SAMPLING A REELED METAL STRIP
PROCÉDÉ D'INSPECTION ET DE TEST D'UN ROULEAU BOBINÉ DE BANDE MÉTALLIQUE

(43) Veröffentlichungstag der Anmeldung: 14.09.2016
(73) Patentinhaber: Primetals Technologies Austria GmbH, 4031 Linz (AT)
(72) Erfinder: Pichler, Lukas, 39050 Deutschnofen (IT); Seilinger, Alois, 4040 Linz (AT)
(74) Vertreter: Mikota, Josef

(56) Entgegenhaltungen:
- EP-A1- 0 497 182
- EP-A2- 0 044 923
- EP-A2- 0 114 935
- WO-A1-2006/111259
- WO-A1-2012/100036
- WO-A1-2012/126631
- DE-A1- 2 815 969
- DE-A1-102011 077 461

## Beschreibung

Die vorliegende Erfindung geht aus von einer Vorrichtung zum Inspizieren und Beproben eines gehaspelten Bundes aus Metallband,
- wobei die Vorrichtung eine Lagereinrichtung für einen gehaspelten Bund aufweist,
- wobei die Lagereinrichtung mindestens zwei nebeneinander angeordnete Bodenrollen aufweist, die parallel zueinander verlaufende Rollenachsen aufweisen und auf die der Bund zur Lagerung aufgesetzt wird,
- wobei die Vorrichtung eine Inspektionsvorrichtung aufweist, die seitlich der Lagereinrichtung angeordnet ist,
- wobei die Inspektionsvorrichtung dazu ausgebildet ist, zumindest dann, wenn das Metallband ein dünnes Metallband ist, eine Inspektion des Metallbandes vorzunehmen.

Eine derartige Vorrichtung ist beispielsweise aus der DE 44 11 905 A1 bekannt. Bei dieser Vorrichtung erfolgt eine Probenentnahme.

Aus der AT 501 782 B1 ist eine Vorrichtung für einen gehaspelten Bund aus Metallband bekannt,
- wobei die Vorrichtung eine Lagereinrichtung für einen gehaspelten Bund aufweist,
- wobei die Lagereinrichtung mindestens zwei nebeneinander angeordnete Bodenrollen aufweist, die parallel zueinander verlaufende Rollenachsen aufweisen und auf die der Bund zur Lagerung aufgesetzt wird,
- wobei die Vorrichtung eine Beprobungsvorrichtung aufweist, die seitlich der Lagereinrichtung angeordnet ist,
- wobei die Beprobungsvorrichtung dazu ausgebildet ist, unabhängig davon, ob das Metallband ein dünnes oder ein dickes Metallband ist, eine Probe des Metallbandes zu nehmen.

Weitere Vorrichtungen zum Inspizieren und/oder Beproben eines gehaspelten Bundes aus Metallband sind beispielsweise aus der WO 2012/100 036 A1 und aus der WO 2012/126 631 A1 bekannt.

Aus der EP 0 114 935 A2 ist eine Vorrichtung zum Inspizieren und Beproben eines gehaspelten Bandes aus Metallband bekannt, wobei die Vorrichtung eine Lagereinrichtung für den gehaspelten Bund aufweist, wobei die Lagereinrichtung mindestens zwei nebeneinander angeordnete Bodenrollen aufweist, die parallel zueinander verlaufende Rollenachsen aufweisen und auf die der Bund zur Lagerung aufgesetzt wird, wobei die Vorrichtung eine Inspektionsvorrichtung aufweist, die seitlich der Lagereinrichtung angeordnet ist, wobei die Inspektionsvorrichtung dazu ausgebildet ist, eine Inspektion des Metallbandes vorzunehmen.

Aus der EP 0 044 923 A2 ist eine Vorrichtung zum Beproben eines gehaspelten Bandes aus Metallband bekannt, wobei die Vorrichtung eine Lagereinrichtung für den gehaspelten Bund aufweist, wobei die Lagereinrichtung mindestens zwei nebeneinander angeordnete Bodenrollen aufweist, die parallel zueinander verlaufende Rollenachsen aufweisen und auf die der Bund zur Lagerung aufgesetzt wird, wobei die Vorrichtung eine Beprobungsvorrichtung aufweist, die dazu ausgebildet ist, zumindest dann, wenn das Metallband ein dickes Metallband ist, eine Probe des Metallbandes zu nehmen.

Beim Walzen von Stahlband geht der Trend dahin, dass in ein und demselben Walzwerk im Produktmix sowohl herkömmliche Güten als auch dicke Rohrgüten (Dicke bis zu ca. 25 mm) und hochfeste Güten produziert werden sollen.

Für herkömmliche Güten im Bereich dünner Bänder (beispielsweise mit einer Dicke von bis zu 6 mm) ist teilweise eine Inspektion des jeweiligen Metallbandes erforderlich. Um die Inspektion durchzuführen, wird einen Teil des bereits gehaspelten Metallbandes auf einem Rollgang abgewickelt. Es erfolgt eine visuelle Inspektion und in manchen Fällen auch eine Probenentnahme. Zur Probenentnahme wird üblicherweise eine hydraulisch angetriebene Schere verwendet.

Für Rohrgüten und oftmals auch für hochfeste Güten ist es erforderlich, nach dem Haspeln des hergestellten Metallbandes eine Probe zu entnehmen und diese zu überprüfen und zu testen. Die Schere zum Abtrennen einer Probe eines dünnen Metallbandes ist hierfür jedoch nicht geeignet. Es ist daher erforderlich, eine hierfür geeignete Beprobungsvorrichtung für dicke Metallbänder vorzusehen.

Die Aufgabe der vorliegenden Erfindung besteht darin, eine Vorrichtung der eingangs genannten Art derart weiter zu entwickeln, dass mittels der Vorrichtung auf einfache und effiziente Weise sowohl dünne Metallbänder inspiziert werden können als von dicken Metallbändern Proben entnommen werden können.

Die Aufgabe wird durch eine Vorrichtung mit den Merkmalen des Anspruchs 1 gelöst. Vorteilhafte Ausgestaltungen der erfindungsgemäßen Vorrichtung sind Gegenstand der abhängigen Ansprüche 2 bis 9.

Erfindungsgemäß wird eine Vorrichtung der eingangs genannten Art dadurch ausgestaltet,
- dass die Vorrichtung zusätzlich zur Inspektionsvorrichtung eine Beprobungsvorrichtung aufweist, die, bezogen auf die Lagereinrichtung, gegenüber der Inspektionsvorrichtung angeordnet ist, so dass sich die Lagereinrichtung zwischen der Inspektionsvorrichtung und der Beprobungsvorrichtung befindet,
- dass die Beprobungsvorrichtung eine Trennvorrichtung aufweist, die dazu ausgebildet ist, zumindest dann, wenn das Metallband ein dickes Metallband ist, eine Probe des Metallbandes zu nehmen.

Als dünnes Metallband ist in der Regel ein Metallband mit einer Dicke von ca. 0,8 mm bis ca. 6 mm anzusehen. Als dickes Metallband ist in der Regel ein Metallband mit einer Dicke von ca. 12 mm bis ca. 25 mm anzusehen. Ein Metallband mit einer Dicke zwischen 6 mm und 12 mm kann - je nach Ausgestaltung der Inspektionsvorrichtung und der Beprobungsvorrichtung - als dünnes Metallband, als dickes Metallband oder nach Bedarf beliebig einzustufen sein.

In der Regel weist die Inspektionsvorrichtung zum Entnehmen einer Probe eines dünnen Metallbandes und/oder zum Abtrennen eines zu inspizierenden Abschnitts des Metallbandes eine Schere auf. Die Schere kann insbesondere hydraulisch angetrieben sein. Es ist im Einzelfall jedoch auch eine Ausgestaltung ohne Schere möglich.

Die Trennvorrichtung kann beispielsweise als Plasmaschneidmaschine oder als rotierende Trennscheibe ausgebildet sein.

Vorzugsweise weist die Beprobungsvorrichtung eine Einfädelhilfe zum Zuführen eines dicken Metallbandes zur Trennvorrichtung auf. Durch die Einfädelhilfe kann das dicke Metallband zuverlässig der Trennvorrichtung zugeführt werden.

Die Einfädelhilfe kann insbesondere als an das dicke Metallband anstellbare Rolle ausgebildet sein. Die Rolle kann nach Bedarf angetrieben oder nicht angetrieben sein.

Vorzugsweise weist die Vorrichtung eine von oben an den Bund ansetzbare Niederhalterolle auf. Durch die Niederhalterolle kann der Bund insbesondere zuverlässig in der Lagereinrichtung gehalten werden. Weiterhin kann ein unerwünschtes Aufspringen des Bundes verhindert werden. Weiterhin kann mittels der Niederhalterolle ein hinreichend großer Druck auf den Bund ausgeübt werden, so dass insbesondere zum Abhaspeln eines dicken Metallbandes eine hinreichend große Reibung und Haftung des Bundes auf den Bodenrollen gewährleistet ist.

Die Niederhalterolle kann nach Bedarf angetrieben oder nicht angetrieben sein. Durch eine angetriebene Niederhalterolle kann insbesondere ein Drehen und Rotieren des Bundes erleichtert und unterstützt werden.

Vorzugsweise ist mindestens eine der Bodenrollen angetrieben. Dadurch ist ein Drehen und Rotieren des Bundes besonders einfach zu bewerkstelligen.

Vorzugsweise weist die Vorrichtung eine einzelne Bindevorrichtung auf, mittels derer sowohl ein aus einem dicken Metallband bestehender Bund als auch ein aus einem dünnen Metallband bestehender Bund bindbar ist. Dadurch kann gegenüber dem Stand der Technik eine Bindevorrichtung eingespart werden. Die Bindevorrichtung kann alternativ mit der Lagereinrichtung, der Inspektionsvorrichtung und der Beprobungsvorrichtung eine Baueinheit bilden. In diesem Fall erfolgt das Binden des Bundes, während er sich auf den Bodenrollen befindet. Alternativ kann es sich um eine eigene Baueinheit handeln. In diesem Fall wird der Bund von den Bodenrollen abgehoben, zur Bindevorrichtung transportiert und dort gebunden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigt in schematischer Darstellung:

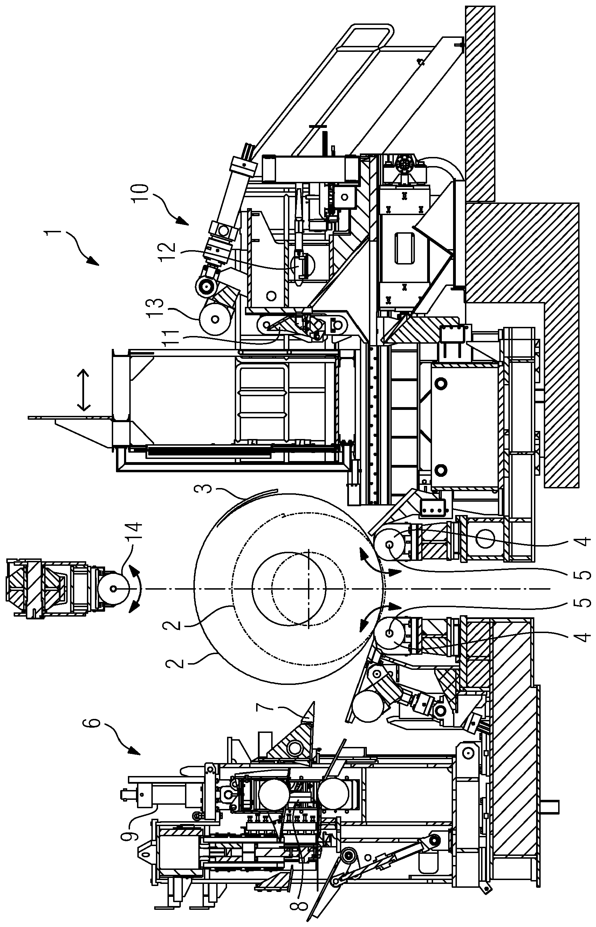

- FIG 1: eine Vorrichtung zum Inspizieren und Beproben eines gehaspelten Bundes aus Metallband.

Gemäß FIG 1 sollen in einer allgemein mit dem Bezugszeichen 1 bezeichneten Vorrichtung Bunde 2 aus Metallband 3 inspiziert und beprobt werden. Eingezeichnet sind in FIG 1 in durchgezogenen Linien ein Bund 2 mit einem maximalen Durchmesser und mit strichpunktierten Linien ein Bund 2 mit einem minimalen Durchmesser. Das Metallband 3 kann insbesondere ein Stahlband sein. Das Metallband 3 weist eine Banddicke d auf, die von Bund 2 zu Bund 2 variiert. Minimal beträgt die Banddicke d ca. 1 mm. In Einzelfällen kann die Banddicke d auch geringfügig unterhalb von 1 mm liegen. Maximal beträgt die Banddicke d ca. 25 mm. In Einzelfällen kann die Banddicke d sogar noch geringfügig über 25 mm liegen.

Prinzipiell kann die Banddicke d irgendwo zwischen 1 mm und 25 mm liegen. In der Regel liegt die Banddicke d jedoch entweder unterhalb von 6 mm oder oberhalb von 12 mm. Ein Metallband 3 mit einer Banddicke d unterhalb von 6 mm wird nachfolgend als dünnes Metallband bezeichnet, ein Metallband 3 mit einer Banddicke d oberhalb von 12 mm als dickes Metallband. Ein Metallband 3 mit einer Banddicke d zwischen 6 mm und 12 mm kann - je nach Ausgestaltung der Vorrichtung 1 - alternativ als dünnes oder als dickes Metallband zu klassifizieren sein. Es ist möglich, dass die Klassifikation durch die weitere Ausgestaltung der Vorrichtung 1 fest vorgegeben ist. Alternativ ist es möglich, dass die Klassifikation des Metallbandes 3 als dünnes oder dickes Metallband im Einzelfall vorgenommen wird. Dies wird aus der nachfolgenden Ausführungen noch ersichtlich werden.

Der jeweilige Bund 2 wird der Vorrichtung 1 mittels einer (nicht dargestellten) Transporteinrichtung zugeführt. Die Transporteinrichtung kann beispielsweise als - an sich bekannter Bundtransportwagen ausgebildet sein. Sie kann auch andersartig ausgebildet sein. Der jeweilige Bund 2 wird auf einer Lagereinrichtung für den gehaspelten Bund 2 abgesetzt. Die Lagereinrichtung weist gemäß FIG 1 mindestens zwei - in der Regel exakt zwei - Bodenrollen 4 auf. Die Bodenrollen 4 sind nebeneinander angeordnet. Sie weisen Rollenachsen 5 auf, die parallel zueinander verlaufen. Der jeweilige Bund 2 wird zur Lagerung auf die Bodenrollen 4 aufgesetzt. In der Regel ist mindestens eine der Bodenrollen 5 angetrieben. Dies ist in FIG 1 durch Doppelpfeile bei den Bodenrollen 4 angedeutet.

Die Vorrichtung 1 weist eine Inspektionsvorrichtung 6 auf. Die Inspektionsvorrichtung 6 ist seitlich der Lagereinrichtung angeordnet. Die Inspektionsvorrichtung 6 ist dazu ausgebildet, zumindest dann, wenn das Metallband 3 ein dünnes Metallband ist, eine Inspektion des Metallbandes 3 vorzunehmen. Hierfür sind im wesentlichen zwei alternative Gestaltungen möglich.

Zum einen ist es möglich, dass die Inspektionsvorrichtung 6 ein Halteelement und eine Schere 8 aufweist. Mittels des Halteelements wird beim Abhaspeln des Metallbandes 3 ein Ende des Metallbandes 3 gefasst. Nach dem Abhaspeln einiger Meter wird der abgehaspelte Abschnitt des Metallbandes 3 mittels der Schere 8 getrennt. Das Halteelement wird angehoben, so dass der abgehaspelte Abschnitt vertikal hängt. In diesem Zustand können beide Seiten des abgehaspelten Abschnitts optisch inspiziert werden. Die Inspektion als solche kann alternativ automatisiert mittels einer Kamera oder direkt durch eine Bedienperson vor Ort erfolgen. Der abgehaspelte Abschnitt wird nach dem Inspizieren verschrottet.

Zum anderen ist es möglich, dass die Inspektionsvorrichtung 6 einen Tisch oder einen Rollgang aufweist, auf welchen der abgehaspelte Abschnitt des Metallbandes 3 gefördert wird. In diesem Fall kann im abgehaspelten Zustand lediglich die Oberseite des Abschnitts inspiziert werden. Die Unterseite des Abschnitts ist jedoch die Außenseite des Bundes 2. Die Unterseite des Abschnitts wird daher unmittelbar beim Abhaspeln inspiziert. In diesem Fall ist es zwar möglich, nicht aber zwingend erforderlich, dass die Inspektionsvorrichtung 6 eine Schere 8 aufweist. Falls die Schere 8 vorhanden ist, dient sie zum Entnehmen einer Probe eines dünnen Metallbandes 3.

Die Inspektionsvorrichtung 6 ist also dazu ausgebildet, eine Inspektion und eventuell auch Beprobung des Metallbandes 3 durchzuführen, wenn das Metallband 3 eine Materialstärke von beispielsweise bis zu 6 mm aufweist. Es ist möglich, dass die Inspektionsvorrichtung 6 nur dann in der Lage ist, eine Beprobung des Metallbandes 3 durchzuführen, wenn das Metallband 3 eine Banddicke d von maximal 6 mm aufweist. Alternativ ist es möglich, dass die Inspektionsvorrichtung 6 zusätzlich auch dann eine Inspektion und eventuell auch Beprobung des Metallbandes 3 durchführen kann, wenn das Metallband 3 eine Banddicke d oberhalb von 6 mm aufweist, beispielsweise von bis zu 10 mm oder von bis zu 12 mm.

Um das Metallband 3 gut abhaspeln zu können, weist die Inspektionsvorrichtung 6 weiterhin einen Separator 7 auf. Der Separator 7 ist an den jeweiligen Bund 2 anstellbar, so dass er in den Spalt zwischen der äußersten Windung des gehaspelten Bundes 2 und der nächstinneren Windung eingreifen kann und dadurch die äußerste Windung vom gehaspelten Bund 2 abheben kann. Nach dem Einführen des Separators 7 in den Spalt wird das Metallband 3 ein Stück abgehaspelt. Der abgehaspelte Abschnitt des Metallbandes 3 wird, wie bereits erwähnt, zumindest optisch inspiziert. Die Inspektionsvorrichtung 6 weist zu diesem Zweck den erwähnten Prüftisch auf (nicht dargestellt).

Falls die Schere 8 vorhanden ist, wird die Schere 8 mittels eines Scherenantriebs 9 betätigt. In diesem Fall kann mittels der Schere 8 eine Probe eines dünnen Metallbandes entnommen werden. Der Scherenantrieb 9 kann elektrisch oder - wie in FIG 1 durch die Darstellung des Scherenantriebs 9 als Hydraulikzylinder angedeutet ist - hydraulisch ausgebildet sein. Die Schere 8 und der Scherenantrieb 9 können insbesondere derart dimensioniert und ausgelegt sein, dass mittels der Schere 8 ein Metallband 3 dann und nur dann durchtrennt werden kann, wenn das Metallband 3 eine Banddicke d aufweist, die nicht größer als eine maximalen Banddicke für ein dünnes Metallband ist. Die maximale Banddicke für ein dünnes Metallband kann, wie bereits erwähnt, beispielsweise bei 6 mm oder auch darüber liegen, beispielsweise bei 8 mm, 10 mm oder 12 mm.

Zusätzlich zur Inspektionsvorrichtung 6 weist die Vorrichtung 1 entsprechend der Darstellung in FIG 1 eine Beprobungsvorrichtung 10 auf. Die Beprobungsvorrichtung 10 ist dazu ausgebildet, zumindest dann, wenn das Metallband 3 ein dickes Metallband ist, eine Probe des Metallbandes 3 zu nehmen. Die Beprobungsvorrichtung 10 ist also dazu ausgebildet, eine Beprobung des Metallbandes 3 durchzuführen, wenn das Metallband 3 eine Materialstärke beispielsweise von mindestens 12 mm aufweist. Es ist möglich, dass die Beprobungsvorrichtung 10 ausschließlich dann in der Lage ist, eine Beprobung des Metallbandes 3 durchzuführen, wenn das Metallband 3 eine Banddicke d von mindestens 12 mm aufweist. Alternativ ist es möglich, dass die Beprobungsvorrichtung 10 zusätzlich auch dann eine Beprobung des Metallbandes 3 durchführen kann, wenn das Metallband 3 eine Banddicke d unterhalb von 12 mm aufweist, beispielsweise von mindestens 10 mm oder von mindestens 8 mm.

Es ist möglich, dass ein Metallband 3, sofern seine Banddicke d in einem bestimmten Wertebereich liegt, weder in der Inspektionsvorrichtung 6 inspiziert noch in der Beprobungsvorrichtung 10 beprobt werden kann. Dies kann beispielsweise der Fall sein, wenn mittels der Inspektionsvorrichtung 6 ein Metallband 3 nur dann inspiziert werden kann, wenn das Metallband 3 eine Banddicke d von maximal 6 mm oder maximal 8 mm aufweist, und mittels der Beprobungsvorrichtung 10 ein Metallband 3 nur dann beprobt werden kann, wenn das Metallband 3 eine Banddicke d von mindestens 12 mm oder mindestens 10 mm aufweist. Auch andere Werte sind möglich.

Alternativ ist es möglich, dass ein Metallband 3 - abhängig von seiner Banddicke d - stets entweder in der Inspektionsvorrichtung 6 inspiziert oder alternativ in der Beprobungsvorrichtung 10 beprobt werden kann. Dies ist dann der Fall, wenn mittels der Inspektionsvorrichtung 6 ein Metallband 3 nur dann inspiziert werden kann, wenn das Metallband 3 eine Banddicke d bis zu einer Grenzdicke aufweist, und mittels der Beprobungsvorrichtung 10 ein Metallband 3 nur dann beprobt werden kann, wenn das Metallband 3 eine Banddicke d von mindestens der Grenzdicke aufweist. Die Grenzdicke kann hierbei nach Bedarf beispielsweise bei 6 mm, 8 mm, 10 mm oder 12 mm liegen. Auch hier sind andere Werte möglich.

Wiederum alternativ ist es möglich, dass ein Metallband 3 - je nach Banddicke d - stets in der Inspektionsvorrichtung 6 inspiziert oder in der Beprobungsvorrichtung 10 beprobt werden kann, in manchen Fällen jedoch wählbar ist, ob das Metallband 3 in der Inspektionsvorrichtung 6 inspiziert oder in der Beprobungsvorrichtung 10 beprobt wird. Dies kann beispielsweise der Fall sein, wenn mittels der Inspektionsvorrichtung 6 ein Metallband 3 inspiziert werden kann, wenn das Metallband 3 eine Banddicke d von maximal 10 mm, aufweist, und mittels der Beprobungsvorrichtung 10 ein Metallband 3 beprobt werden kann, wenn das Metallband 3 eine Banddicke d von mindestens 8 mm aufweist. Auch andere Werte sind möglich.

Die Beprobungsvorrichtung 10 ist - ebenso wie die Inspektionsvorrichtung 6 - seitlich der Lagereinrichtung angeordnet. Die Beprobungsvorrichtung 10 ist jedoch, bezogen auf die Lagereinrichtung, gegenüber der Inspektionsvorrichtung 6 angeordnet. Die Lagereinrichtung (insbesondere die Bodenrollen 4) befindet sich also zwischen der Inspektionsvorrichtung 6 und der Beprobungsvorrichtung 10.

Mittels der Beprobungsvorrichtung 10 soll insbesondere stets eine Probe des Metallbandes 3 entnommen werden. Um eine derartige Probe entnehmen zu können, ist die Beprobungsvorrichtung 10, wie in FIG 1 durch einen Doppelpfeil angedeutet, als Ganzes an den Bund 2 heranfahrbar. Weiterhin weist die Beprobungsvorrichtung 10 ebenfalls einen Separator 11 auf. Der Separator 11 wird - analog zum Separator 7 - in den Spalt zwischen der äußersten Windung des gehaspelten Bundes 2 und der nächstinneren Windung eingeführt und kann dadurch die äußerste Windung vom gehaspelten Bund 2 abheben. Nach dem Einführen des Separators 7 in den Spalt wird der Bund 2 ein Stück abgehaspelt. Der abgehaspelte Abschnitt des Bundes 2 wird sodann mittels einer Trennvorrichtung 12 der Beprobungsvorrichtung 10 vom übrigen Metallband 3 abgetrennt und dadurch eine entsprechende Probe entnommen. Die Trennvorrichtung 12 kann insbesondere entsprechend der Darstellung in FIG 1 als Plasmaschneidmaschine ausgebildet sein. Alternativ kann die Trennvorrichtung 12 beispielsweise als rotierende Trennscheibe ausgebildet sein.

Oftmals erfolgt das Haspeln des Metallbandes 3, während das Metallband 3 noch heiß ist. In diesem Fall ist der zeitliche Verlauf der Abkühlung des Metallbandes 3 im Inneren des gehaspelten Bundes 2 anders als in der äußersten Windung des Bundes 2. In einem derartigen Fall weist die äußerste Windung des Bundes 2 oftmals andere Materialeigenschaften auf als die anderen Windungen des Bundes 2. Es kann daher erforderlich sein, bei der Probenentnahme zunächst ein Schrottstück oder auch mehrere Schrottstücke abzutrennen, bevor eine repräsentative Probe genommen werden kann.

In vielen Fällen ist die genommene Probe ein Streifen, der sich über die gesamte Breite des Metallbandes 3 erstreckt. Zwingend ist dies jedoch nicht erforderlich. Mittels der Trennvorrichtung 12 kann - eine entsprechende Gestaltung der Trennvorrichtung 12 vorausgesetzt - auch eine andersartig geformte Probe entnommen werden.

Unabhängig von der übrigen Ausgestaltung der Beprobungsvorrichtung 10 weist die Beprobungsvorrichtung 10 eine Einfädelhilfe 13 auf. Die Einfädelhilfe 13 dient dem Zuführen eines dicken Metallbandes 3 zur Trennvorrichtung 12. Die Einfädelhilfe 13 kann insbesondere entsprechend der Darstellung in FIG 1 als Rolle ausgebildet sein, die an das Metallband 3 anstellbar ist. Die Rolle 13 ist vorzugsweise nicht angetrieben. Alternativ kann die Rolle 13 angetrieben sein.

Vorzugsweise weist die Vorrichtung 1 weiterhin eine Niederhalterolle 14 auf. Die Niederhalterolle 14 ist von oben an den Bund 2 ansetzbar. Die Niederhalterolle 14 dient der Sicherung eines auf den Bodenrollen 4 angeordneten Bundes 2. Die Niederhalterolle 14 ist drehbar. Sie kann, wie in FIG 1 durch einen Doppelpfeil angedeutet ist, angetrieben sein. Alternativ kann die Niederhalterolle 13 als nicht angetriebene Rolle ausgebildet sein.

Die Vorrichtung 1 weist weiterhin eine - in FIG 1 nicht dargestellte - einzelne Bindevorrichtung auf. Mittels der Bindevorrichtung ist in an sich bekannter Art und Weise ein Bund 2 bindbar. Das Binden des jeweiligen Bundes 2 erfolgt nach der Inspektion in der Inspektionsvorrichtung 6 bzw. nach der Beprobung in der Beprobungsvorrichtung 10. Der Bund 2 ist in der Bindevorrichtung unabhängig davon bindbar, ob das Metallband 3, aus dem der Bund 2 besteht, ein dickes Metallband oder ein dünnes Metallband ist.

Zusammengefasst betrifft die vorliegende Erfindung somit folgenden Sachverhalt:
Eine Vorrichtung 1 zum Inspizieren und Beproben eines gehaspelten Bundes 2 aus Metallband 3 weist eine Lagereinrichtung für den gehaspelten Bund 2 auf. Die Lagereinrichtung weist mindestens zwei nebeneinander angeordnete Bodenrollen 4 auf, die parallel zueinander verlaufende Rollenachsen 5 aufweisen und auf die der Bund 2 zur Lagerung aufgesetzt wird. Die Vorrichtung 1 weist eine Inspektionsvorrichtung 6 auf, die seitlich der Lagereinrichtung angeordnet ist. Die Inspektionsvorrichtung 6 ist dazu ausgebildet, zumindest dann, wenn das Metallband 3 ein dünnes Metallband ist, eine Inspektion des Metallbandes 3 vorzunehmen. Die Vorrichtung 1 weist zusätzlich zur Inspektionsvorrichtung 6 eine Beprobungsvorrichtung 10 auf, die, bezogen auf die Lagereinrichtung, gegenüber der Inspektionsvorrichtung 6 angeordnet ist, so dass sich die Lagereinrichtung zwischen der Inspektionsvorrichtung 6 und der Beprobungsvorrichtung 10 befindet. Die Beprobungsvorrichtung 10 weist eine Trennvorrichtung 12 auf, die dazu ausgebildet ist, zumindest dann, wenn das Metallband 3 ein dickes Metallband ist, eine Probe des Metallbandes 3 zu nehmen.

Die vorliegende Erfindung weist viele Vorteile auf. Insbesondere können in ein und derselben Vorrichtung 1 sowohl Bunde 2 aus dünnem Metallband 3 inspiziert als auch Bunde 2 aus dickem Metallband 3 beprobt werden. Weiterhin ist - unabhängig von deren weiterer Ausgestaltung - nur eine einzelne Transporteinrichtung für die Bunde 2 erforderlich. Auch die Bindevorrichtung muss nur ein einziges Mal vorhanden sein. Im Ergebnis verringern sich die Investitionskosten daher erheblich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Vorrichtung
- 2: Bunde
- 3: Metallband
- 4: Bodenrollen
- 5: Rollenachsen
- 6: Inspektionsvorrichtung
- 7: Separator
- 8: Schere
- 9: Scherenantrieb
- 10: Beprobungsvorrichtung
- 11: Separator
- 12: Trennvorrichtung
- 13: Einfädelhilfe
- 14: Niederhalterolle

- d: Banddicke

## Patentansprüche

1. Vorrichtung zum Inspizieren und Beproben eines gehaspelten Bundes (2) aus Metallband (3),
- wobei die Vorrichtung eine Lagereinrichtung für den gehaspelten Bund (2) aufweist,
- wobei die Lagereinrichtung mindestens zwei nebeneinander angeordnete Bodenrollen (4) aufweist, die parallel zueinander verlaufende Rollenachsen (5) aufweisen und auf die der Bund (2) zur Lagerung aufgesetzt wird,
- wobei die Vorrichtung eine Inspektionsvorrichtung (6) aufweist, die seitlich der Lagereinrichtung angeordnet ist,
- wobei die Inspektionsvorrichtung (6) dazu ausgebildet ist, zumindest dann, wenn das Metallband (3) ein dünnes Metallband ist, eine Inspektion des Metallbandes (3) vorzunehmen,
**dadurch gekennzeichnet,**
- **dass** die Vorrichtung zusätzlich zur Inspektionsvorrichtung (6) eine Beprobungsvorrichtung (10) aufweist, die, bezogen auf die Lagereinrichtung, gegenüber der Inspektionsvorrichtung (6) angeordnet ist, so dass sich die Lagereinrichtung zwischen der Inspektionsvorrichtung (6) und der Beprobungsvorrichtung (10) befindet,
- **dass** die Beprobungsvorrichtung (10) eine Trennvorrichtung (12) aufweist, die dazu ausgebildet ist, zumindest dann, wenn das Metallband (3) ein dickes Metallband ist, eine Probe des Metallbandes (3) zu nehmen.

2. Vorrichtung nach Anspruch 1,
**dadurch gekennzeichnet,**
**dass** die Inspektionsvorrichtung (6) zum Entnehmen einer Probe eines dünnen Metallbandes (3) und/oder zum Abtrennen eines zu inspizierenden Abschnitts des dünnen Metallbandes (3) eine Schere (8) aufweist.

3. Vorrichtung nach Anspruch 1 oder 2,
**dadurch gekennzeichnet,**
**dass** die Trennvorrichtung (12) als Plasmaschneidmaschine oder als rotierende Trennscheibe ausgebildet ist.

4. Vorrichtung nach Anspruch 1, 2 oder 3,
**dadurch gekennzeichnet,**
**dass** die Beprobungsvorrichtung (10) eine Einfädelhilfe (13) zum Zuführen eines dicken Metallbandes (3) zur Trennvorrichtung (12) aufweist.

5. Vorrichtung nach Anspruch 4,
**dadurch gekennzeichnet,**
**dass** die Einfädelhilfe (13) als an das dicke Metallband (3) anstellbare Rolle ausgebildet ist.

6. Vorrichtung nach einem der obigen Ansprüche,
**dadurch gekennzeichnet,**
**dass** die Vorrichtung eine von oben an den Bund (2) ansetzbare Niederhalterolle (14) aufweist.

7. Vorrichtung nach Anspruch 6,
**dadurch gekennzeichnet,**
**dass** die Niederhalterolle (14) angetrieben oder nicht angetrieben ist.

8. Vorrichtung nach einem der obigen Ansprüche,
**dadurch gekennzeichnet,**
**dass** mindestens eine der Bodenrollen (4) angetrieben ist.

9. Vorrichtung nach einem der obigen Ansprüche,
**dadurch gekennzeichnet,**
**dass** die Vorrichtung eine einzelne Bindevorrichtung aufweist, mittels derer sowohl ein aus einem dicken Metallband (3) bestehender Bund (2) als auch ein aus einem dünnen Metallband (3) bestehender Bund (2) bindbar ist.

## Claims

1. Device for inspecting and sampling a wound coil (2) of metal strip (3),
- wherein the device has a mounting installation for the wound coil (2) ;
- wherein the mounting device has at least two base rollers (4) that are disposed beside one another and have roller axes (5) which run so as to be mutually parallel and onto which the coil (2) is placed for mounting;
- wherein the device has an inspection device (6) which is disposed so as to be lateral to the mounting installation;
- wherein the inspection device (6) is configured for performing an inspection of the metal strip (3) at least when the metal strip (3) is a thin metal strip;
**characterized in that**
- the device in addition to the inspection device (6) has a sampling device (10) which in relation to the mounting installation is disposed so as to be opposite the inspection device (6) such that the mounting device is located between the inspection device (6) and the sampling device (10),
- the sampling device (10) has a separation device (12) that is configured for taking a specimen of the metal strip (3) at least when the metal strip (3) is a thick metal strip.

2. Device according to Claim 1,
**characterized in that**
the inspection device (6) has a cutter (8) for removing a specimen of a thin metal strip (3) and/or for severing a portion of the thin metal strip (3) to be inspected.

3. Device according to either of Claims 1 and 2,
**characterized in that**
the separation device (12) is configured as a plasma cutting machine or as a rotating cutting disk.

4. Device according to one of Claims 1, 2, or 3,
**characterized in that**
the sampling device (10) has a threading aid (13) for infeeding a thick metal strip (3) to the separation device (12).

5. Device according to Claim 4,
**characterized in that**
the threading aid (13) is configured as a roller that can be brought to bear on the thick metal strip (3).

6. Device according to one of the preceding claims,
**characterized in that**
the device has a downholding roller (14) that can be placed from above on the coil (2).

7. Device according to Claim 6,
**characterized in that**
the downholding roller (14) is driven or not driven.

8. Device according to one of the preceding claims,
**characterized in that**
at least one of the base rollers (4) is driven.

9. Device according to one of the preceding claims,
**characterized in that**
the device has a single strapping device by means of which both a coil (2) that is composed of a thick metal strip (3) as well as a coil (2) that is composed of a thin metal strip (3) can be strapped.

## Revendications

1. Dispositif destiné à l'inspection et à l'échantillonnage d'un rouleau bobiné (2) d'une bande métallique (3)
- dans lequel le dispositif présente un mécanisme de support pour le rouleau bobiné (2) ;
- dans lequel le mécanisme de support présente au moins deux rouleaux de base (4) disposés l'un à côté de l'autre qui présentent des axes de rouleaux (5) s'étendant en parallèle l'un par rapport à l'autre et sur lesquels la bobine (2) vient s'appuyer à des fins de support ;
- dans lequel le dispositif présente un dispositif d'inspection (6) qui est disposé latéralement par rapport au mécanisme de support ;
- dans lequel le dispositif d'inspection (6) est réalisé, au moins lorsque la bande métallique (3) représente une bande métallique mince, dans le but de procéder à une inspection de la bande métallique (3) ;
**caractérisé**
- **en ce que** le dispositif présente, en plus du dispositif d'inspection (6), un dispositif d'échantillonnage (10) qui est disposé, par rapport au mécanisme de support, en face du dispositif d'inspection (6), d'une manière telle que le mécanisme de support est situé entre le dispositif d'inspection (6) et le dispositif d'échantillonnage (10) ;
- **en ce que** le dispositif d'échantillonnage (10) présente un dispositif de séparation (12) qui est réalisé, au moins lorsque la bande métallique (3) représente une bande métallique épaisse, dans le but de prélever un échantillon de la bande métallique (3).

2. Dispositif selon la revendication 1, **caractérisé en ce que** le dispositif d'inspection (6) présente une cisaille (8) pour le prélèvement d'un échantillon d'une bande métallique mince (3) et/ou pour la séparation d'un tronçon à inspecter de la bande métallique mince (3).

3. Dispositif selon la revendication 1 ou 2, **caractérisé en ce que** le dispositif de séparation (12) est réalisé sous la forme d'une machine à découper au plasma ou sous la forme d'un disque de séparation rotatif.

4. Dispositif selon la revendication 1, 2 ou 3, **caractérisé en ce que** le dispositif d'échantillonnage (10) présente un auxiliaire d'enfilage (13) pour l'acheminement d'une bande métallique épaisse (3) au dispositif de séparation (12).

5. Dispositif selon la revendication 4, **caractérisé en ce que** l'auxiliaire d'enfilage (13) est réalisé sous la forme d'un rouleau qui peut venir se positionner contre la bande métallique épaisse (3).

6. Dispositif selon l'une quelconque des revendications ci-dessus, **caractérisé en ce que** le dispositif présente un rouleau de maintien en place (14) qui peut venir s'appliquer contre la bobine (2) à partir du haut.

7. Dispositif selon la revendication 6, **caractérisé en ce que** le rouleau de maintien en place (14) est entraîné ou n'est pas entraîné.

8. Dispositif selon l'une quelconque des revendications ci-dessus, **caractérisé en ce qu'**au moins un des rouleaux de base (4) est entraîné.

9. Dispositif selon l'une quelconque des revendications ci-dessus, **caractérisé en ce que** le dispositif présente un dispositif de fixation individuel au moyen duquel on peut fixer aussi bien une bobine (2) constituée d'une bande métallique épaisse (3) qu'une bobine (2) constituée d'une bande métallique mince (3).
